# EUROPÄISCHE PATENTSCHRIFT

(11) **EP 0 372 639 B1**
(45) Veröffentlichungstag und Bekanntmachung des Hinweises auf die Patenterteilung: **07.09.1994**
(21) Anmeldenummer: 89203049.5
(22) Anmeldetag: 01.12.1989
(51) Int. Cl.: G10L 5/06

(54) **System zur Spracherkennung**
Speech recognition system
Dispositif pour la reconnaissance de la parole

(30) Priorität: 07.12.1988 AT 3002/88
(43) Veröffentlichungstag der Anmeldung: 13.06.1990
(73) Patentinhaber: Philips Electronics N.V., 5621 BA Eindhoven (NL)
(72) Erfinder: Honis, Rudolf, NL-5656 AA Eindhoven (NL)
(74) Vertreter: van der Kruk, Willem Leonardus

(56) Entgegenhaltungen:
- GB-A- 2 082 820

## Beschreibung

Die Erfindung betrifft ein Spracherkennungssystem gemäss, dem Oberbegriff des Patentanspruchs. Ein derartiges System ist im Handel erhältlich. Im Zuge eines auf einen bestimmten Sprecher bezogenen Lernprozesses eines derartigen Systems muß ein bestimmtes zu lernendes Wort von dem bestimmten Sprecher solange ausgesprochen werden, bis er am Bildschirm eine Quittierung erhält, daß das betreffende Wort richtig erlernt und erkannt wurde. Üblicherweise spricht der Sprecher dabei in ein Mikrofon, dessen elektrische Signale dann der Spracherkennungseinrichtung zugeführt werden. Nach Abschluß des Lernprozesses können dann dem System die einem Text entsprechenden Tonsignale eingegeben werden, die dann vom System als einzelne Wörter erkannt und angegeben werden. Wenn derartige einem Text entsprechende Tonsignale wieder über ein Mikrofon der Spracherkennungseinrichtung zugeführt werden, funktioniert ein solches System in der Regel zufriedenstellend. Wird jedoch eine andere Eingabe derartiger einem Text entsprechender Tonsignale gewählt, wobei dann ein anderer Übertragungsweg vom Mikrofon bis zur Spracherkennungseinrichtung vorliegt, so kommt es vielfach zu Schwierigkeiten in der Spracherkennungseinrichtung, dahingehend, daß die einzelnen Wörter nicht richtig festgestellt werden. Dies beruht darauf, daß in dem anderen Übertragungsweg die Tonsignale verändert werden und nicht mehr vollständig den beim Lernprozeß verwendeten Tonsignalen entsprechen. Dies kann beispielsweise dann eintreten, wenn einem Spracherkennungssystem die einem Text entsprechenden Tonsignale über eine Diktiergeräteanordnung eingegeben werden, wie dies beispielsweise in IBM Technical Disclosure Bulletin Vol.22, Nr.7, Dezember 1979, Seiten 2891 und 2892 angegeben ist. Die Eingabe von einem Text entsprechenden Tonsignalen über eine Diktiergeräteanordnung ist dabei deshalb vorteilhaft, weil der Diktierende dann nicht an den Standort des Systems zur Spracherkennung gebunden ist.

Die Erfindung hat sich zum Ziel gesetzt, bei einem System zur Spracherkennung der eingangs angeführten Gattung die vorgenannten Schwierigkeiten zu beseitigen und ein System zu schaffen, mit dem sowohl der Lernprozeß einfach und sicher durchführbar ist als auch die Spracherkennung der in einem Text enthaltenen Wörter mit einer möglichst geringen Fehlerrate erfolgt. Die Erfindung beruht hiebei auf der Erkenntnis sowohl für die Spracheingabe bei einem Lernprozeß als auch für die Spracheingabe von Texten im wesentlichen den gleichen Signalübertragungsweg vorzusehen, wobei der Signalübertragungsweg für den Lernprozeß so gestaltet ist, daß eine unmittelbare Reaktion des Sprechers auf die gesprochenen bestimmten zu lernenden Wörter möglich ist. Das Spracherkennungssystem ist dazu gemäss den Teilmerkmalen des kennzeichnenden Teils des Patentanspruchs gekennzeichnet.

Auf diese Weise wird ein interaktiver Lernprozeß ermöglicht, der den gleichen Signalübertragungsweg verwendet, wie er später im Zuge einer Spracheingabe von Texten vorliegt. Es sei an dieser Stelle erwähnt, daß es an sich bekannt ist, Tonsignale auf einem Speichermedium in Form eines Magnetbandes aufzuzeichnen und unmittelbar anschließend wieder von dem Speichermedium abzutasten, um eine Überwachung der Tonaufzeichnung, ob diese tatsächlich einwandfrei ist, vornehmen zu können, wie dies beispielsweise in der DE-AS 1 059 204 angegeben ist, was jedoch in keinerlei Zusammenhang mit einem System zur Spracherkennung steht. Weiters sei erwähnt, daß es auch bereits bekannt ist, einem Spracherkennungssystem für einen Lernprozeß die auf einem Magnetband aufgezeichneten Tonsignale der bestimmten zu lernenden Wörter von diesem her zuzuführen, wie dies in der DE-OS 35 18 337 angegeben ist. In einem solchen Fall ist aber keine unmittelbare Reaktion des betreffenden Sprechers möglich, dahingehend, ob die betreffenden Wörter im Zuge des Lernprozesses tatsächlich richtig erlernt und erkannt wurden, was den Lernprozeß wesentlich kompliziert, da, wenn sich nachträglich herausstellt, daß die aufgezeichneten Tonsignale für einen Lernprozeß nicht geeignet sind, alle erforderlichen Tonsignale nochmals aufgezeichnet werden müssen. Demgegenüber ermöglicht das erfindungsgemäße System einen interaktiven Lernprozeß, bei dem der betreffende Sprecher unmittelbar auf ein richtiges oder falsches Feststellen der Wörter reagieren kann.

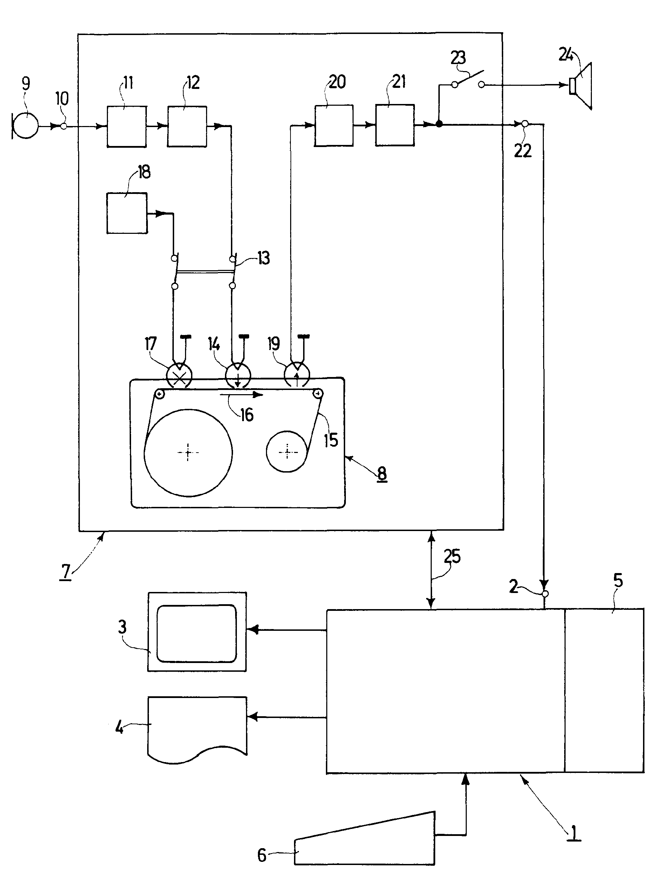

Die Erfindung wird im folgenden anhand der Zeichnung, in der ein Ausführungsbeispiel der Erfindung dargestellt ist, auf das sie jedoch nicht beschränkt sein soll, näher erläutert. Die in der Zeichnung dargestellte Figur zeigt ein Blockschaltbild eines Systems zur Spracherkennung.

In dem in der Figur gezeigten Blockschaltbild ist mit 1 eine Spracherkennungseinrichtung bezeichnet, der an ihrem Eingang 2 die einem Text entsprechenden Tonsignale in Form elektrischer Signale zugeführt werden, die dann von der Spracherkennungseinrichtung analysiert und verarbeitet werden, um die in ihnen enthaltenen einzelnen Wörter festzustellen, die dann als Text auf einem Bildschirm 3 dargestellt oder mit einem Drucker 4 ausgedruckt werden können. Damit die in einem Text enthaltenen Wörter mit einer kleinen Fehlerrate möglichst sicher erkannt werden, also die Anzahl falsch festgestellter Wörter möglichst gering ist, weist die Spracherkennungseinrichtung 1 eine Lernvorrichtung 5 auf, mit der in einem eigenen Lernprozeß die Spracherkennungseinrichtung an die charakteristische Aussprache eines bestimmten Sprechers angepaßt wird. Im Zuge eines solchen Lernprozesses werden der Spracherkennungseinrichtung 1 von einer Tastatur 6 her nacheinander bestimmte Wörter eingegeben, wobei der bestimmte Sprecher, an den das System angepaßt werden soll, diese Wörter einzeln in ein Mikrofon spricht, von dem her die Tonsignale als elektrische Signale dem Eingang 2 der Spracherkennungseinrichtung zugeführt werden. Hiebei ist es vielfach erforderlich, daß ein einzelnes Wort vom Sprecher mehrmals ausgesprochen wird, um der Spracherkennungseinrichtung mit Hilfe der Lernvorrichtung die Möglichkeit zu geben, das betreffende Wort richtig festzustellen beziehungsweise zu erlernen. Über den Bildschirm 3 werden dabei dem Sprecher Angaben über den Fortgang des Lernprozesses angezeigt, wie beispielsweise "zu leise gesprochen", "nochmals wiederholen" oder schließlich "Wort erkannt". Auf diese am Bildschirm angezeigten Angaben hat somit der Sprecher während des Lernprozesses zu reagieren. Ist der Lernprozeß abgeschlossen, so können dann der Spracherkennungseinrichtung die einem Text entsprechenden Tonsignale eingegeben werden, aus denen die Spracherkennungseinrichtung die in ihnen enthaltenen einzelnen Wörter feststellt.

Im vorliegenden Fall ist vorgesehen, daß die einem Text entsprechenden Tonsignale in an sich bekannter Weise über ein durch ein Wiedergabegerät abtastbares Speichermedium der Spracherkennungseinrichtung eingegeben werden. Die Wahl des Speichermediums selbst kann dabei weitgehendst beliebig getroffen werden, was auch für die Art und Weise der Speicherung selbst gilt. Beispielsweise kann das Speichermedium ein Magnetband oder eine Magnetscheibe sein. Die Signalspeicherung selbst kann hiebei sowohl in analoger als auch in digitaler Form erfolgen. Somit besteht zwischen dem Mikrofon, in das der Sprecher spricht, und dem Eingang 2 der Spracherkennungseinrichtung 1 ein spezieller Signalübertragungsweg, der die vom Mikrofon gelieferten Tonsignale beeinflußt.

Demgemäß ist nun weiters vorgesehen, daß für einen Lernprozeß der Spracherkennungseinrichtung ein im wesentlichen gleicher Signalübertragungsweg zwischen dem Mikrofon, in das der Sprecher die zu erlernenden Wörter spricht, und dem Eingang 2 der Spracherkennungseinrichtung 1 besteht, wie er auch bei der Spracheingabe von Texten vorliegt. Auf diese Weise ist erreicht, daß im Zuge eines Lernprozesses die der Spracherkennungseinrichtung zugeführten Tonsignale die gleiche Beeinflussung erfahren wie anschließend an den Lernprozeß die Tonsignale, die einem Text entsprechen, aus denen die Spracherkennungseinrichtung die einzelnen Wörter feststellen soll. Durch eine derart gleiche Beeinflussung der Tonsignale wird eine kleine Fehlerrate beim Erkennen der in einem Text enthaltenen Wörter erreicht, so daß die Anzahl durch die Spracherkennungseinrichtung falsch festgestellter Wörter besonders gering ist.

Um dies zu erreichen, ist vorgesehen, daß das Wiedergabegerät, mit dem die einem Text entsprechenden Tonsignale von einem Speichermedium her der Spracherkennungseinrichtung eingegeben werden, zusätzlich als Aufzeichnungsgerät in Form eines Aufzeichnungs- und Wiedergabegerätes 7 ausgebildet ist, mit dem die im Zuge eines Lernprozesses der Spracherkennungseinrichtung 1 eingebbaren Tonsignale vorerst auf dem Speichermedium aufgezeichnet und unmittelbar anschließend wieder von dem Speichermedium abgetastet und der Spracherkennungseinrichtung eingegeben werden. Im vorliegenden Fall ist angenommen, daß das Speichermedium durch eine Magnetbandkassette 8 gebildet ist. Die von einem Mikrofon 9 stammenden Tonsignale werden einem Eingang 10 des Aufzeichnungs- und Wiedergabegerätes 7 zugeführt, von dem her sie an einen Verstärker 11 und eine Signalverarbeitungsschaltung 12 gelangen, in der die Signale frequenzgangmäßig und hinsichtlich ihres Rauschens beeinflußt werden können. Von dieser Signalverarbeitungsschaltung 12 gelangen die Tonsignale über eine Schalteinrichtung 13 an einen Aufzeichnungskopf 14, der mit dem sich in der Magnetbandkassette 8 befindenden Magnetband 15 zusammenwirkt. In üblicher Weise ist in der durch einen Pfeil 16 angegebenen Bandlaufrichtung gesehen, vor dem Aufzeichnungskopf 14 noch ein Löschkopf 17 vorgesehen, der über die Schalteinrichtung 13 an einen Oszillator 18 anschaltbar ist, um vor einer Aufzeichnung gegebenenfalls sich am Magnetband befindende Signale zu löschen. Wieder in der Bandlaufrichtung gesehen, ist nach dem Aufzeichnungskopf 14 ein Wiedergabekopf 19 angeordnet, mit dem die auf dem Magnetband aufgezeichneten Tonsignale unmittelbar anschließend wieder von dem Magnetband abgetastet werden können. Vom Wiedergabekopf 19 her werden die abgetasteten Tonsignale wieder einem Verstärker 20 und gegebenenfalls wieder einer Signalverarbeitungsschaltung 21 zugeführt, von der her sie an einen Ausgang 22 des Aufzeichnungs- und Wiedergabegerätes 7 gelangen. Von diesem Ausgang 22 her sind die Tonsignale dem Eingang 2 der Spracherkennungseinrichtung 1 zuführbar. An den Ausgang der Signalverarbeitungsschaltung 21 kann beispielsweise über einen Schalter 23 auch ein Lautsprecher 24 angeschlossen sein, um die vom Magnetband abgetasteten Signale gegebenenfalls abhören zu können. Durch einen Doppelpfeil 25 sind weiters Steuerleitungen angedeutet, um gegebenenfalls gegenseitige Steuerbefehle zwischen dem Aufzeichnungs- und Wiedergabegerät 7 und der Spracherkennungseinrichtung 1 austauschen zu können.

Im Zuge eines Lernprozesses der Spracherkennungseinrichtung werden nun die vom Mikrofon 9 kommenden Tonsignale mit dem Aufzeichnungskopf 14 am Magnetband 15 aufgezeichnet und unmittelbar anschließend wieder mit dem Wiedergabekopf 19 vom Magnetband abgetastet und dem Eingang 2 der Spracherkennungseinrichtung zugeführt, in dem dann der bereits vorstehend beschriebene Lernprozeß abläuft, dessen Ergebnisse dann am Bildschirm 3 angezeigt werden. Somit kann der Sprecher der bestimmten zu lernenden Wörter unmittelbar dem Lernprozeß folgen und auf dessen Ergebnisse reagieren. Durch einen derartigen interaktiv ablaufenden Lernprozeß kann somit der Lernprozeß an sich rasch und sicher abgewickelt werden.

Anschließend an einen solchen Lernprozeß können dann die einem Text entsprechenden Tonsignale über das Aufzeichnungsund Wiedergabegerät der Spracherkennungseinrichtung eingegeben werden. Hiebei bestehen nun zwei Möglichkeiten, nämlich, daß entweder die Spracherkennungseinrichtung 1 in Realzeit, also gleichzeitig mit der Aufzeichnung und unmittelbar anschließenden Wiedergabe der einem Text entsprechenden Tonsignale auf beziehungsweise von dem Speichermedium, oder unabhängig von einer Aufzeichnung der einem Text entsprechenden Tonsignale auf dem Speichermedium, also zu einem gegenüber der Aufzeichnung späteren Zeitpunkt, zu dem dann die auf dem Speichermedium bereits aufgezeichneten Tonsignale von diesem wiedergegeben werden, arbeitet. Im erstgenannten Fall werden somit die einem Text entsprechenden Tonsignale praktisch unmittelbar von der Spracherkennungseinrichtung ausgewertet, wogegen im zweitgenannten Fall eine solche Auswertung zu einem beliebigen, gegenüber der Speicherung der Tonsignale späteren Zeitpunkt erfolgen kann. Das hiebei zur Speicherung der Tonsignale verwendete Aufzeichnungs- und Wiedergabegerät 7 kann dabei in Form eines handelsüblichen Diktiergerätes ausgebildet sein, nur mit dem Unterschied, daß es mit einem separaten Wiedergabekopf ausgerüstet ist, mit dem das auf dem Speichermedium aufgezeichnete Signal auch unmittelbar anschließend wieder von dem Speichermedium abgetastet werden kann. Weiters besteht aber auch die Möglichkeit, daß die einem Text entsprechenden Tonsignale auf einem separaten Aufzeichnungsgerät, wie beispielsweise einem Taschendiktiergerät, auf dem Speichermedium aufgezeichnet werden, wonach dann nach fertiggestellter Aufzeichnung das Speichermedium dem separaten Aufzeichnungsgerät entnommen und anschließend in das mit der Spracherkennungseinrichtung 1 verbundene Aufzeichnungs-und Wiedergabegerät 7 eingesetzt wird. In einem solchen Fall ist dann nur ein Wiedergabebetrieb des Aufzeichnungs- und Wiedergabegerätes 7 erforderlich, was bedeutet, daß mit der Schalteinrichtung 13 die Aufzeichnungsmöglichkeit unterbunden werden kann.

Wie ersichtlich, ist mit einem wie im vorstehenden beschriebenen System zur Spracherkennung ein Lernprozeß der Spracherkennungseinrichtung einfach und sicher auf interaktive Weise durchführbar. Außerdem wird eine gute Qualität der Spracherkennung erreicht, da sowohl für die Eingabe der Tonsignale im Lernprozeß als auch der Eingabe der einem Text entsprechenden Tonsignale ein gleiche Eigenschaften aufweisender Signalübertragungsweg vom Mikrofon zum Eingang der Spracherkennungseinrichtung verwendet wird. Selbstverständlich besteht im Rahmen der Erfindung noch eine Reihe von Abwandlungsmöglichkeiten des im vorstehenden beschriebenen Ausführungsbeispieles, in welchem Zusammenhang insbesondere die Art und Weise der Ausgestaltung des verwendeten Aufzeichnungs- und Wiedergabegerätes zu erwähnen ist.

## Patentansprüche

1. Spracherkennungssystem, bestehend aus:
einer Spracherkennungseinrichtung (1), die eine Lernvorrichtung (5) zur Anpassung der Spracherkennungseinrichtung (1) an die charakteristische Aussprache eines bestimmten Sprechers aufweist,
wobei die Spracherkennungseinrichtung einerseits eine Tastatur zur Eingabe bestimmter Wörter für einen Lernprozeß und andererseits ein Mikrofon zur Eingabe der zu den bestimmten Wörtern gehörenden, von dem betreffenden Sprecher stammenden Tonsignale aufweist,
einem Bildschirm zur Anzeige von Angaben über den Fortgang des Lernprozesses, auf welche der betreffende Sprecher zu reagieren hat,
ein Wiedergabegerät (7) und ein durch das Wiedergabegerät abtastbares Speichermedium (8) zur nach Abschluß des Lernprozesses erfolgenden Eingabe der einem Text entsprechenden Tonsignale in die Spracherkennungseinrichtung, aus denen die Spracherkennungseinrichtung die in ihnen enthaltenen einzelnen Wörter feststellt,
dadurch gekennzeichnet,
daß das Wiedergabegerät (7) zusätzlich als Aufzeichnungsgerät in Form eines Aufzeichnungs- und Wiedergabegerätes zur Aufzeichnung auf dem Speichermedium und unmittelbar darauf folgender Wiedergabe der im Zuge eines Lernprozesses der Spracherkennungseinrichtung eingebbaren Tonsignale ausgebildet ist.

## Claims

1. A speech recognition system comprising:
a speech recognition arrangement (1) including a learning device (5) for adapting the speech recognition arrangement to the characteristic pronunciation of a given speaker,
the speech recognition arrangement comprising a keyboard for the input of given words for a learning process into the speech recognition arrangement *via* a keyboard, and a microphone for the input of the sound signals corresponding to the given words and originating from the relevant speaker,
a display screen for displaying data on the progress of the learning process, to which data the relevant speaker should respond,
a reproducing device (7) and a storage medium (8) adapted to be scanned by the reproducing device, for the input of the sound signals corresponding to a text into the speech recognition arrangement after termination of the learning process, from which the speech recognition arrangement determines the individual words contained in them,
characterised in that
in addition the reproducing device (7) is constructed as a recording device in the form of a recording and reproducing device for recording on and immediately after this reproducing from the storage medium the sound signals to be inputted into the speech recognition arrangement in the course of a learning process.

## Revendications

1. Système de reconnaissance de la parole constitué de :
un dispositif de reconnaissance de la parole (1) qui comporte un dispositif d'apprentissage (5) destiné à adapter le dispositif de reconnaissance de la parole (1) à la prononciation spécifique du locuteur;
le dispositif de reconnaissance de la parole comportant d'une part un clavier destiné à l'introduction de mots déterminés pour un processus d'apprentissage et d'autre part un microphone destiné à l'introduction des signaux audio relatifs aux mots déterminés et émanant du locuteur en question;
un écran destiné à l'affichage de données relatives à l'évolution du processus d'apprentissage et auxquelles le locuteur en question est tenu de réagir, et
un appareil de reproduction (7) et un support d'enregistrement (8) pouvant être lu par l'appareil de reproduction en vue, au terme du processus d'apprentissage, d'introduire correctement dans le dispositif de reconnaissance de la parole des signaux audio correspondant à un texte à partir desquels le dispositif de reconnaissance de la parole saisit les divers mots contenus dans ces signaux audio,
caractérisé en ce que :
l'appareil de reproduction (7) est conçu, en outre, comme appareil d'enregistrement se présentant sous la forme d'un appareil d'enregistrement et de reproduction destiné à l'enregistrement sur le support d'enregistrement et, immédiatement après, à la lecture des signaux audio à introduire dans le dispositif de reconnaissance de la parole au cours du processus d'apprentissage.
